# EUROPEAN PATENT APPLICATION

(11) **EP 2 204 975 A1**
(43) Date of publication of application: **07.07.2010**
(21) Application number: 09152910.7
(22) Date of filing: 16.02.2009
(51) Int. Cl.: H04M 3/436, H04M 3/42

(54) **A method for invoking the Anonymous Call Rejection (ACR) service in a telecommunication network**

(30) Priority: 02.01.2009 IN CH00102009
(71) Applicant: Alcatel Lucent, 75008 Paris (FR)
(72) Inventor: Balamurugan, Balasubramanian, 600082 Chennai (IN); Karthick, Rajapandiyan, 600044 Chennai (IN); Gopannan, Ramachandran, 600045 Chennai (IN)
(74) Representative: Sciaux, Edmond

(57) **Abstract**

This method comprises the steps of detecting a received call set up request message with Calling Party Number Parameter containing a Presentation Restriction indicator with a value Presentation Restricted, and no Address Signal/Digits/Calling party numbers; and, if such a request message is detected, then sending back, to the originating switch (2) that has sent the request message, a response message (13) rejecting the call request and indicating that the cause of the rejection is the fact that the calling party number presentation is restricted.

## Description

### BACKGROUND OF THE INTENTION

### Field of the invention

The present invention generally relates to the telecommunication networks, and more specifically concerns a method for invoking the "Anonymous Call Rejection" (ACR) service in a telecommunication network, and a call control node adapted for implementing this method.

A service called "Calling Line Identity Presentation" (CLIP) shows the calling party's number, before the callee takes a call. Whenever the phone rings, it automatically displays the calling party's number, on a screen of the phone, before the callee picks up the receiver.

A service called "Calling Line Identity Restriction" (CLIR) prevents a caller's number from being shown to anyone that is called by this caller. If a caller does not want his/her number to be displayed to a callee, the caller activates this service. Then each call is anonymous.

The service called "Anonymous Call Rejection" (ACR) enables rejecting calls that do not display a calling party number. It can be enabled/disabled by any subscriber, by dialing a code. If the calling party number is not sent up to the terminating switch, in a call set up message, the terminating switch rejects the call and a node of the originating network transmits to the calling party an audio message such as: "The number you are calling does not accept calls from callers who do not allow the delivery of their telephone number, please unblock your number and try again".

### Description of the prior art

The Integrated Service Digital Networks (ISDN) use a signaling protocol called ISDN User Part (ISUP) that is a part of the Signaling System #7 which is used to set up telephone calls in Public Switched Telephone Networks. It is specified by the ITU-T as part of the Q.76x series, ANSI (T1.113-YEAR) and Telcordia former Bellcore GR-246 series.

When a telephone call is set up from one subscriber to another, many telephone exchanges will be involved, possibly across international boundaries. To allow a call to be set up correctly, where ISUP is supported, a switch signals call-related information like called or calling party number to the next switch in the network, using ISUP messages.

An ISUP message contains a fixed header containing the circuit identification code and the ISUP message type, followed by a fixed-length part and optional variable-length part that are dependent on the type of message being sent. The most common messages are:
· Initial Address Message (IAM) - First message sent to inform the partner switch, that a call has to be established on the time slot identified in the message. Contains the called and calling number, type of service (speech or data) and many more optional parameters.
· Subsequent Address Message (SAM) - In case the IAM did not contain the full called number, one or more SAM may follow containing additional digits.
· Address Complete Message (ACM) - Message returned from the terminating switch when the subscriber is reached and the phone starts ringing.
· Answer Message (ANM) - Sent when the subscriber picks up the phone. Normally charging starts at this moment.
· Release (REL) - Sent to clear the call when a subscriber goes on hook.
· Release Complete (RLC) - Acknowledgement of the release - the timeslot is idle afterwards and can be used again.

Normally REL message is triggered from the Caller/originating Switch, when the caller goes on hook. But in some cases a backward REL message is triggered from the Callee/terminating switch, if the terminating switch determines that the call cannot be completed. The terminating switch also sends a Cause Value to explain the reason for the failure, e.g. "User busy", "Anonymous call rejection", etc.

More and more subscribers are using the "Anonymous Call Rejection" (ACR) service, to avoid anonymous call from an unknown person, or network, i. e. without displaying a calling party number. But in the known networks using the ISUP protocol, ACR gets invoked only if the call set up request message contains,
- an indicator "Address Presentation Restricted indicator" (APRI) with a value "Presentation restricted' (i.e. 01),
   and
- a Calling Party Number/Address signal/Digits.
When ACR gets invoked, a network node transmits to the calling party an audio message such as: "The number you are calling does not accept calls from callers who do not allow the delivery of their telephone number, please unblock your number and try again". Then the calling party is aware of the cause of the call failure. The calling party can try another call after deactivating the CLIR.

On the other hand, ACR is not invoked, i. e. a call is terminated successful to the called party, if the Address Presentation Restricted Indicator is set to "Presentation restricted" (i.e. 01) and no Calling Party Number/Address Signals/Digits is sent to the terminating exchange in the call set up request message. This successful call termination occurs in certain cases such as when the originating network does not provide the Calling Party Number/Address signal/Digits for any reason to the terminating exchange, even though the called party has subscribed to ACR feature.

The aim of the invention is to allow the invocation of ACR, even though no Calling Party Number/Address signal/Digits is sent to the terminating exchange, but only Address Presentation Restricted indicator is sent and set to "Presentation Restricted".

This problem is solved by applying the method according to the invention.

### SUMMARY OF THE INVENTION

A first object of the invention is a method for invoking the Anonymous Call Rejection service in a telecommunication network when a call control node of this network receives a call set up request message; **characterized in that** it comprises the steps of:
- detecting a received call set up request message with Calling Party Number Parameter containing a Presentation Restriction indicator with a value Presentation Restricted, and no Address Signal/Digits/Calling party numbers,
- and, if such a request message is detected, then sending back, to the originating switch that has sent the request message, a response message rejecting the call request and indicating that the cause of the rejection is the fact that the calling party number presentation is restricted.

Thanks to this characteristic, the ACR is invoked in all cases when detecting that the request message contains a Address Presentation Restriction indicator set to value Presentation Restricted, irrespective of the fact that Calling party number/Address Signals/Digits is present or not. So the calling party knows the reason of the call failure even if the calling party number/Address Signals/Digits is not transmitted to the terminating switch. Then the calling party can succeed with another call, after deactivating the CLIR.

A second object of the invention is a node comprising means for implementing the method according to the invention.

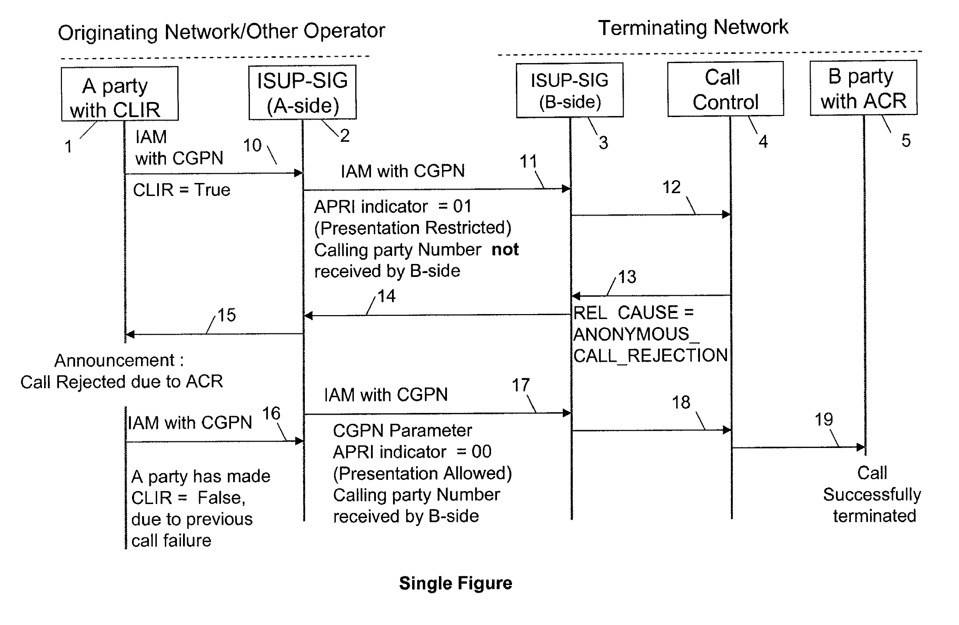

Other features and advantages of the present invention will become more apparent from the following detailed description of an embodiment of the present invention, when taken in conjunction with the accompanying drawing.

### BRIEF DESCRIPTION OF THE DRAWING

In order to illustrate in detail features and advantages of the present invention, the following description will be with reference to the accompanying single figure that shows a signaling flow for an example in which ACR is invoked according to the invention.

### DETAILED DESCRIPTION OF A PREFERRED EMBODIMENT

The figure shows a signaling flow for an example in which the phone terminal of a calling party A, is attached to an originating switch 1 in an originating network. The terminal of a called party B is attached to a terminating switch 5 in a terminating network. Party A is calling party B. The party A has activated the "Calling Line Identity Restriction" (CLIR) and the party B has activated the "Anonymous Call Rejection" (ACR) service.
**Step 10:** The originating switch 1 sends an IAM message to a signaling point 2 of the originating network. This message IAM contains the Calling Party Number (CGPN) Parameter and an indication that A party has activated CLIR, i.e. CLIR = TRUE.
**Step 11:** Then the signaling point 2 sends an IAM message to a switching point 3 of the terminating network. This message IAM contains the Calling Party Number (CGPN) parameter with an Address Restriction Presentation Restriction Indicator (APRI) with a value equal to 01 (Presentation **Restricted**). But the Calling Party Number Address Signals/Digits is not received by the switching point 3 of the terminating network because, the originating network is designed so that it does not forward Calling Party Number /Address Signals/Digits to another network. Only Address presentation Restriction Indicator (APRI) with a value equal to 01 (Presentation Restricted) is sent.
**Step 12:** The switching point 3 sends an IAM message to a switch 4 of the terminating network, this switch 4 executing call control software. This message IAM contains the Calling Party Number parameter (CGPN) with only an Address Presentation Restriction Indicator (APRI) with a value equal to 01 (Presentation Restricted) i.e switching point 3 just forward the received IAM message to switch 4 where call control software is executed.
**Step 13:** The call control software detects that the ACR is activated for the called party B. Then it responds to the signaling point 3 with a backward Release (REL) message containing a Cause indicator value explaining the cause as ANONYMOUS_CALL_REJECTION.
**Step 14:** The signaling point 3 forwards this Release message (REL) message to the signaling point 2.
**Step 15:** The signaling point 2 forwards this Release message (REL) message to the switch 1. The switch 1 plays an audio announcement to the terminal of party A, this announcement explaining that the call request is rejected because party B has activated ACR.
**Step 16:** Thanks to this announcement, party A understands that he/she must deactivate the CLIR. So party A deactivates the CLIR and tries again to call party B. The switch 1 sends an IAM message to the signaling point 2 of the originating network. This message IAM contains the Calling Party Number (CGPN) parameter and an indication that A party has now deactivated CLIR, i.e. CLIR = **FALSE.**
**Step 17:** Then the signaling point 2 sends an IAM message to the switching point 3 of the terminating network. This message IAM contains the calling party number (CGPN) parameter with an Address Presentation Restriction Indicator (APRI) with a value equal to 00 (Presentation **Allowed**) and the Calling Party Number /Address Signals/Digits is received by the switching point 3 of the terminating network because, because the originating network is designed so that it forwards a Calling Party Number/Address Signals/Digits to another network, along with the Address Presentation Restricted Indicator i.e. APRI = 00 (Presentation Allowed).
**Step 18:** The switching point 3 forwards the IAM message to the switch 4 of the terminating network.
**Step 19:** This message IAM contains a Calling Party Number (CGPN) parameter containing both the Address Restriction Presentation Restriction Indicator (APRI) = 00 (Presentation Allowed) and also the Calling Party Number/Address Signals/Digits. Thus the call control software, executed by the switch 4, sends another IAM message to the switch 5 to command the setup of a call with the terminal of party B. The rest of the signaling exchange is quite classical.

It is within the skills of a Man skilled in the Art to make a call control node comprising software means for detecting that a received call set up request message contains a Address Presentation Restriction indicator; and, if a Address Presentation Restriction indicator with Value 01 (Presentation restricted) is detected, sending back, to the originating switch that has sent the request message, a response message rejecting the call request and indicating that the cause of the rejection is the fact that the calling party number presentation is restricted.

## Claims

1. A method for invoking the Anonymous Call Rejection service in a telecommunication network when a call control node (4) of this network receives a call set up request message (12); **characterized in that** it comprises the steps of:
- detecting a received call set up request message with Calling Party Number Parameter containing a Presentation Restriction indicator with a value Presentation Restricted, and no Address Signal/Digits/Calling party numbers,
- and, if such a request message is detected, then sending back, to the originating switch (2) that has sent the request message, a response message (13) rejecting the call request and indicating that the cause of the rejection is the fact that the calling party number presentation is restricted.

2. A call control node (4) comprising means for invoking the Anonymous Call Rejection service in a telecommunication network, **characterized in that** said means comprise means for detecting a received call set up request message with Calling Party Number Parameter containing a Presentation Restriction indicator with a value Presentation Restricted, and no Address Signal/Digits/Calling party numbers,
and, if such a request message is detected, then sending back, to the originating switch (2) that has sent the request message, a response message (13) rejecting the call request and indicating that the cause of the rejection is the fact that the calling party number presentation is restricted.
